# EUROPEAN PATENT APPLICATION

(11) **EP 4 434 856 A1**
(43) Date of publication of application: **25.09.2024**
(21) Application number: 23778148.9
(22) Date of filing: 28.03.2023
(51) Int. Cl.: B62D 25/24, E05B 81/06, E05B 83/24, E05B 85/00

(54) **ACTUATOR, CHARGE PORT COVER, AND VEHICLE**

(30) Priority: 31.03.2022 CN 202220769896 U
(71) Applicant: BYD Company Limited, Shenzhen, Guangdong 518118 (CN)
(72) Inventor: ZHANG, Canlin, Shenzhen, Guangdong 518118 (CN); WANG, Xiangang, Shenzhen, Guangdong 518118 (CN); ZHU, Dawei, Shenzhen, Guangdong 518118 (CN)
(74) Representative: Arnold & Siedsma
(86) International application number: PCT/CN2023/084221
(87) International publication number: WO 2023/185783

(57) **Abstract**

An actuator, a charging port cover, and a vehicle are provided. The actuator includes a motor (4), a transmission mechanism (5), a clutch mechanism (6), and an output shaft (66). The motor (4) is connected to the clutch mechanism (6) in a transmission manner through the transmission mechanism (5). The clutch mechanism (6) is connected to the output shaft (66). The transmission mechanism is power-coupled to the output shaft by using the clutch mechanism when the motor drives the output shaft to rotate. The transmission mechanism is power-decoupled from the output shaft by using the clutch mechanism when an external force drives the output shaft to rotate. The charging port cover including the foregoing actuator has a function of preventing the charging port cover from being opened by mistake. A user needs to apply an external force to manually open the charging port cover when the motor fails and the charging port cover cannot be normally opened, to effectively prevent the charging port cover from being opened by mistake due to an accidental external force.

## Description

### CROSS-REFERENCE TO RELATED APPLICATIONS

This application claims priority to Chinese Patent Application No. 202220769896.X, entitled "ACTUATOR, CHARGING PORT COVER, AND VEHICLE" and filed by BYD Co., Ltd. on March 31, 2022.

### FIELD

The present disclosure relates to the field of smart charging technologies, and specifically, to an actuator, a charging port cover, and a vehicle.

### BACKGROUND

Currently, most new energy vehicles on the market continue to use a manually opened charging port cover of fuel vehicles. For ease of control, some of the new energy vehicles use an automatically opened electric charging port cover. A commonly used control manner of the charging port cover is to automatically open the charging port cover by using a motor. To implement an emergency opening function, an internal structure of the electric charging port cover does not support a self-locking function, and a driver can directly open the charging port cover manually.

However, when a vehicle turns sharply or brakes urgently, the electric charging port cover may be opened by mistake due to an excessive external force. To prevent the electric charging port cover from being opened by mistake due to the excessive external force, the electric charging port cover needs to have the self-locking function. However, this causes the electric charging port cover to not have the emergency opening function. Currently, this problem cannot be resolved for the electric charging port cover.

### SUMMARY

The present disclosure is intended to resolve one of technical problems in the related art at least to some extent.

The present disclosure provides an actuator.

The actuator according to the present disclosure includes a motor, a transmission mechanism, a clutch mechanism, and an output shaft. The motor is connected to the clutch mechanism in a transmission manner through the transmission mechanism. The clutch mechanism is connected to the output shaft. The transmission mechanism is power-coupled to the output shaft by using the clutch mechanism when the motor drives the output shaft to rotate. The transmission mechanism is power-decoupled from the output shaft by using the clutch mechanism when an external force drives the output shaft to rotate.

Therefore, a charging port cover including the foregoing actuator has a function of preventing the charging port cover from being opened by mistake. A user needs to apply an external force to manually open the charging port cover when the motor fails and the charging port cover cannot be normally opened, to effectively prevent the charging port cover from being opened by mistake due to an accidental external force.

The present disclosure further provides a charging port cover. The charging port cover includes the foregoing actuator. The charging port cover further includes a cap. A rotating shaft of the cap fits to an output shaft.

The present disclosure further provides a vehicle. The vehicle includes the foregoing charging port cover and a sending device. The sending device is configured to send a start signal to the motor.

Other aspects and advantages of the present disclosure will be given in the following descriptions, some of which will become apparent from the following descriptions or may be learned from practices of the present disclosure.

### BRIEF DESCRIPTION OF THE DRAWINGS

FIG. 1 is an exploded view of an actuator according to an embodiment of the present disclosure;
FIG. 2 is a first view of a clutch mechanism according to an embodiment of the present disclosure;
FIG. 3 is a second view of a clutch mechanism according to an embodiment of the present disclosure;
FIG. 4 is a schematic partial structural diagram of a clutch mechanism according to an embodiment of the present disclosure;
FIG. 5 is a schematic structural diagram of a first meshing portion according to an embodiment of the present disclosure;
FIG. 6 is a schematic structural diagram of a transmission gear according to an embodiment of the present disclosure;
FIG. 7 is a structural diagram of an elastic member according to an embodiment of the present disclosure;
FIG. 8 is a structural diagram of a retainer ring according to an embodiment of the present disclosure;
FIG. 9 is a structural diagram of an actuator according to an embodiment of the present disclosure; and
FIG. 10 is a structural diagram of a charging port cover according to an embodiment of the present disclosure.

### DETAILED DESCRIPTION

Embodiments of the present disclosure are described in detail below, and examples of the embodiments are shown in the accompanying drawings, where the same or similar elements or the elements having the same or similar functions are denoted by the same or similar reference numerals throughout the accompanying drawings. The embodiments described below with reference to the accompanying drawings are exemplary, and are intended to explain the present disclosure and cannot be construed as a limitation to the present disclosure.

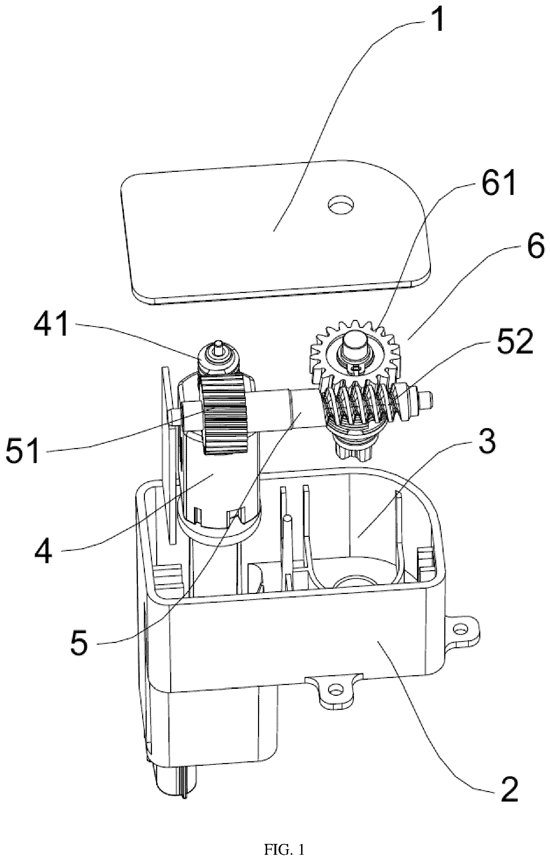

Referring to FIG. 1, an actuator provided in this embodiment includes a housing. The housing includes an upper housing 1 and a lower housing 2. An accommodation cavity 3 is formed between the upper housing 1 and the lower housing 2. A motor 4, a transmission mechanism 5, and a clutch mechanism 6 are arranged inside the accommodation cavity 3. A length of a side of the accommodation cavity 3 for accommodating the motor 4 is greater than a length of a side of the accommodation cavity 3 for accommodating the clutch mechanism 6. The transmission mechanism 5 is a worm wheel and worm. A worm 41 is arranged at an output end of the motor 4. A worm wheel end 51 of the transmission mechanism 5 is connected to the worm 41 in a transmission manner. A worm end 52 of the transmission mechanism is connected to a transmission member on the clutch mechanism 6 in a transmission manner. The transmission member is a transmission gear 61. An axis of the motor 4 and an axis of the transmission mechanism 5 are perpendicular to each other. The axis of the motor and an axis of a main shaft 62 of the clutch mechanism 6 are parallel to each other. The lower housing 2 is in an L-shape. The entire actuator is arranged in an L-shape, and is more suitable for the overall arrangement inside a vehicle body. Certainly, the transmission mechanism 5 is not limited to the worm wheel and worm, but may alternatively be a pulley transmission mechanism, a gear set transmission mechanism, or another transmission mechanism capable of performing the same function. The worm wheel and worm is only one of the mechanisms.

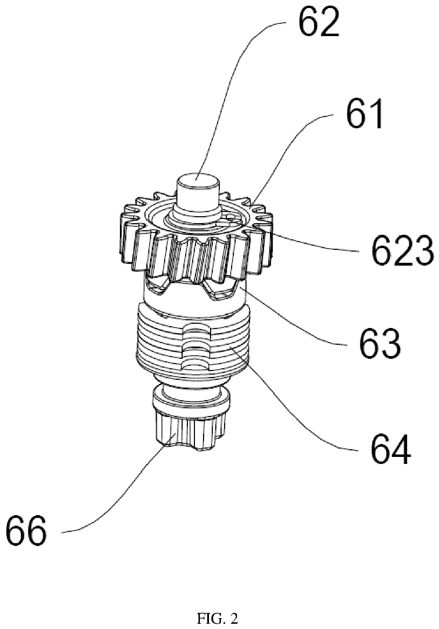

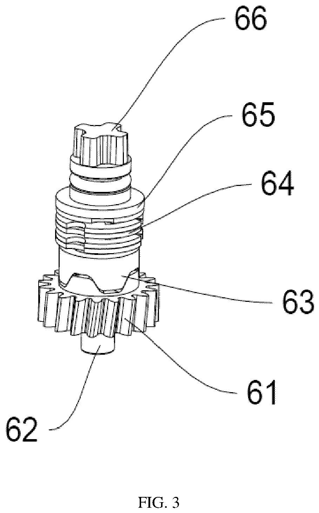

Referring to FIG. 2 and FIG. 3, the clutch mechanism 6 includes the main shaft 62 and a baffle 65. The transmission gear 61, a coupling 63, an elastic member 64, and the baffle 65 are sequentially sleeved along an axial direction of the main shaft 62. An output shaft 66 is fixed to the baffle 65. A first end of the main shaft 62 is in transmission cooperation to the transmission gear 61. A second end of the main shaft 62 is fixedly connected to the baffle 65. The transmission gear 61 rotates around the main shaft 62. A second end of the elastic member 64 abuts against the baffle 65. A first end of the elastic member 64 abuts against the coupling 63. The coupling 63 and the elastic member 64 are pressed between the transmission gear 61 and the baffle 65. When the motor 4 drives the worm 41 to rotate, the worm 41 drives the worm wheel end 51 to rotate, the worm end 52 drives the transmission gear 61 to rotate, and the transmission gear 61 drives, by using the main shaft 62, the output shaft 66 to rotate. In this embodiment, the transmission cooperation between the main shaft 62 and the transmission gear 61 is pin shaft fit.

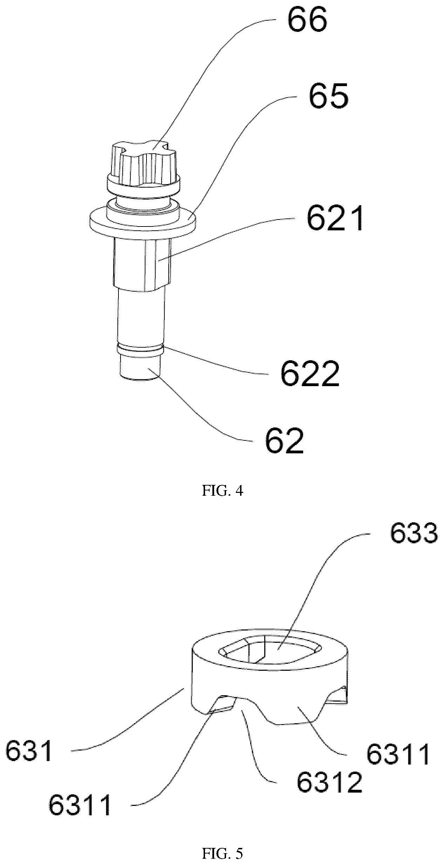

Referring to FIG. 4 to FIG. 6, the coupling 63 includes a first meshing portion 631 and a second meshing portion 632 meshing with each other. A transmission groove 633 is provided on the first meshing portion 631. A transmission shaft 621 is arranged on the main shaft 62. The transmission shaft 621 fits to the transmission groove 633. A first side of the first meshing portion 631 abuts against an end face of the elastic member 64. A second side of the second meshing portion 632 is fixed to an end face of a first side of the transmission gear 61. At least two first convex portions 6311 are arranged spaced away on the first meshing portion 631. A first concave portion 6312 is formed between adjacent first convex portions 6311. The second meshing portion 632 includes at least two second convex portions 6321 arranged spaced away. A second concave portion 6322 is formed between adjacent second convex portions 6321. The first convex portion 6311 fits to the second concave portion 6322. The second convex portion 6321 fits to the first concave portion 6312.

In this embodiment, to prevent a charging port cover from being opened by mistake, the transmission gear 61 of the clutch mechanism 6 and the worm end 52 of the transmission mechanism 5 are in a self-locked state. In other words, the motor 4 can drive, by using the transmission mechanism 5, the transmission gear 61 to rotate, but in turn the output shaft 66 cannot reversely drive the worm end 52 of the transmission mechanism 5 by using the transmission gear 61. The charging port cover needs to be manually opened when the motor 4 fails to operate normally. The charging port cover is opened by hand, the charging port cover drives the output shaft 66 to rotate, and the output shaft 66 drives, by using the transmission shaft 621, the first meshing portion 631 to rotate. Because the transmission gear 61 and the worm end 52 are in the self-locked state, and the second meshing portion 632 is fixed to the transmission gear 61, the second meshing portion 632 is fixed at an original position. When the first meshing portion 631 rotates, the first meshing portion 631 is disengaged from the second meshing portion 632 due to relative movement of the first convex portion 6311 on a guide surface of a corresponding second convex portion 6321, to implement power decoupling of the output shaft 66 from the transmission mechanism 5. Therefore, the output shaft 66 can be driven to rotate by an external force, and the charging port cover can be opened manually. In addition, the elastic member causes the coupling 63 to abut against the transmission gear 61, and applies a pre-tightening force to the coupling 63, which is equivalent to pressing the coupling 63 tightly by the elastic member 64. When an external force is required to drive the coupling 63 to rotate, a degree of external force is required to be applied to drive the coupling 63 to rotate to implement power decoupling between the output shaft 66 and the transmission mechanism 5. In this case, the output shaft 66 is not easily driven by mistake by an accidental external force in an emergency situation, and the charging port cover is not easily opened by mistake.

In this embodiment, a quantity of first convex portions 6311 is four and a quantity of second convex portions 6321 is four. A central angle formed between the adjacent first convex portions 6311 is 90°. The first meshing portion 631 and the second meshing portion 632 are re-coupled every time the output shaft 66 rotates by 90°. In this case, the first meshing portion 631 and the second meshing portion 632 are in a stable state, and the first meshing portion 631 and the second meshing portion 632 do not slip from each other. The charging port cover also rotates by 90°, so that a user inserts a charging connector directly into a charging port easily.

It should be noted that a quantity of first convex portions 6311 is at least two and a quantity of second convex portions 6321 is at least two. If the quantity of first convex portions 6311 is two and the quantity of second convex portions 6321 is two, the output shaft needs to rotate by 180° to re-couple the first meshing portion 631 and the second meshing portion 632. A required rotation angle is excessively large. This solution can be theoretically implemented, but is less likely to be practically applied. When the quantity of first convex portions 6311 is three and the quantity of second convex portions 6321 is three, the output shaft needs to rotate by 120° to re-couple the first meshing portion 631 and the second meshing portion 632. When the quantity of first convex portions 6311 is five and the quantity of second convex portions 6321 is five, the output shaft needs to rotate by 72° to re-couple the first meshing portion 631 and the second meshing portion 632. However, an opening of the charging port cover is excessively small, which does not facilitate insertion of the charging connector. In this case, the charging port cover needs to rotate by 72° again to re-couple the first meshing portion 631 and the second meshing portion 632, and the operation is inconvenient. In conclusion, the quantity of first convex portions 6311 may be set to three or four and the quantity of second convex portions 6321 may be set three or four.

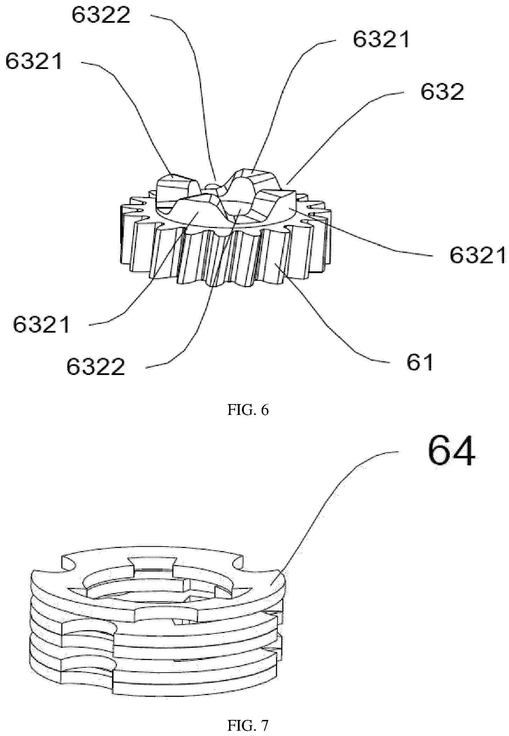

Referring to FIG. 7, the elastic member 64 may be a disc spring, a wave spring, or a compression spring. The second end of the elastic member 64 abuts against the baffle 65. The first end of the elastic member 64 abuts against the coupling 63. The elastic member 64 is configured to apply the pre-tightening force to the coupling 63, cause the coupling 63 to abut against the transmission gear 61, and press the coupling 63 tightly.

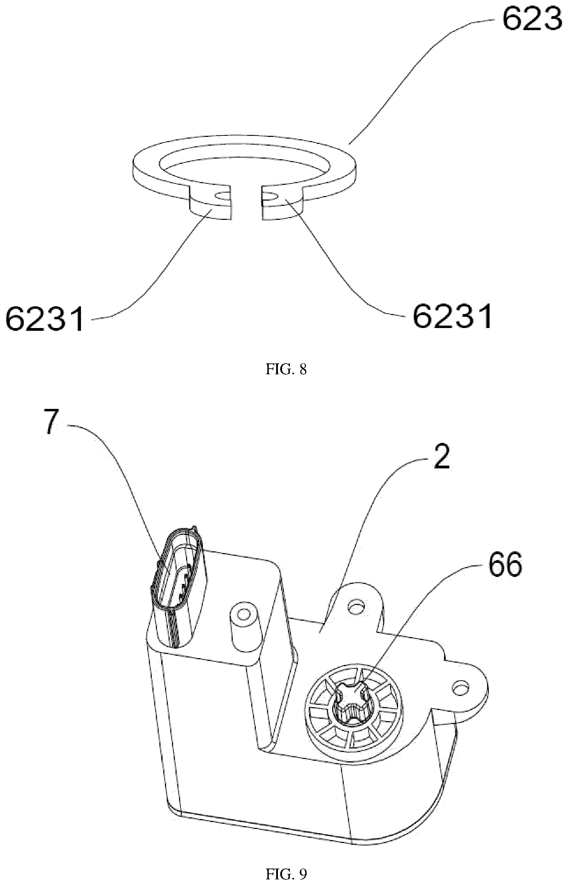

Referring to FIG. 4 and FIG. 8, a mounting groove 622 is provided on the main shaft 62. A retainer ring 623 is arranged inside the mounting groove 622. A stop portion 6231 is arranged on the retainer ring 623. The stop portion 6231 abuts against an end face of a second side that is of the transmission gear 61 and that is away from the second meshing portion 632.

In the foregoing solution, the stop portion 6231 abuts against the end face of the second side of the transmission gear 61 to implement a stopping function of the transmission gear 61 in the axial direction of the main shaft 62, to prevent the transmission gear 61 from slipping off the main shaft 62 during rotation.

Referring to FIG. 9, a connection socket 7 is arranged on the lower housing 2, A cable in a vehicle is inserted into the connection socket 7. The cable transmits a start signal to the motor 4 through the connection socket 7, to drive the motor 4 to rotate and drive the charging port cover to open.

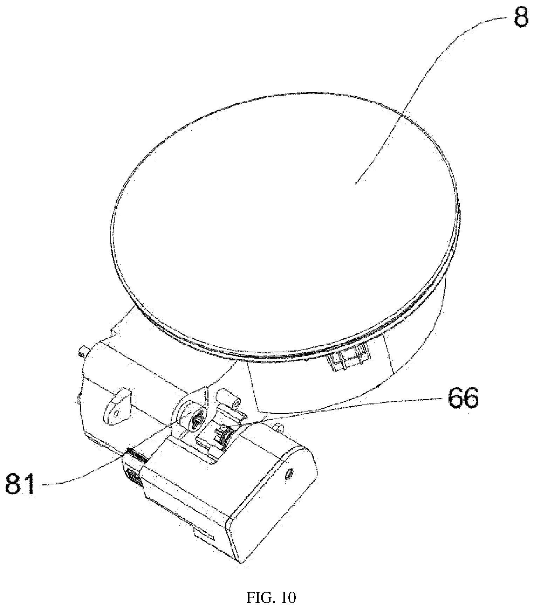

Referring to FIG. 10, a charging port cover provided in this embodiment includes the foregoing actuator and further includes a cap 8. A rotating shaft 81 is arranged on the cap 8. The rotating shaft 81 fits to the output shaft 66. When the output shaft 66 rotates, the rotating shaft 81 is also driven to rotate, so that the cap 8 is driven to turn over to expose a charging port. Then the charging connector is inserted for charging.

A vehicle provided in this embodiment includes the foregoing charging port cover and further includes a sending device. The sending device is configured to send a start signal to the motor.

In this embodiment, the sending device is a cable. The connection socket 7 is arranged on the housing of the actuator. The cable is inserted into the connection socket 7. When the charging port cover needs to be opened, the start signal is sent to the charging port cover through a vehicle center control screen. The motor starts to rotate after receiving the start signal sent by the cable, to drive the cap 8 to rotate, to expose the charging port. In this case, a user inserts a charging connector into a charging port to charge the vehicle. The sending device is not limited to the cable, but may be another apparatus having the same function.

In the descriptions of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of description for the present disclosure, rather than indicating or implying that the mentioned apparatus or element must have a particular orientation or must be constructed and operated in a particular orientation. Therefore, such terms should not be construed as limiting of the present disclosure.

In addition, terms "first" and "second" are used only for the purpose of description, and shall not be construed as indicating or implying relative importance or implying a quantity of indicated technical features. Therefore, a feature limited by "first" or "second" may explicitly or implicitly include one or more of the features. In the descriptions of the present disclosure, "a plurality of" means two or more, unless otherwise definitely and specifically limited.

In the descriptions of the present disclosure, unless otherwise explicitly specified or defined, the terms such as "mount", "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in the present disclosure according to specific situations.

In the present disclosure, unless otherwise explicitly specified or defined, the first feature being located "above" or "below" the second feature may be the first feature being in a direct contact with the second feature, or the first feature being in an indirect contact with the second feature through an intermediary. In addition, that the first feature is "above", "over", or "on" the second feature may indicate that the first feature is directly above or obliquely above the second feature, or may only indicate that the horizontal position of the first feature is higher than that of the second feature. That the first feature is "below", "under", and "beneath" the second feature may be that the first feature is right below the second feature or at an inclined bottom of the second feature, or may only indicate that the horizontal position of the first feature is lower than that of the second feature.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present disclosure. In this specification, exemplary descriptions of the foregoing terms do not necessarily refer to a same embodiment or example. Besides, the specific features, the structures, the materials, or the characteristics that are described may be combined in proper manners in any one or more embodiments or examples. In addition, a person skilled in the art may integrate or combine different embodiments or examples described in the specification and features of the different embodiments or examples as long as they are not contradictory to each other.

Although embodiments of the present disclosure are shown and described above, it can be understood that, the foregoing embodiments are exemplary, and cannot be construed as a limitation to the present disclosure. Within the scope of the present disclosure, a person of ordinary skill in the art may make changes, modifications, replacement, and variations to the foregoing embodiments.

## Claims

1. An actuator, comprising a motor, a transmission mechanism, a clutch mechanism, and an output shaft, the motor being connected to the clutch mechanism in a transmission manner through the transmission mechanism, the clutch mechanism being connected to the output shaft; the transmission mechanism being power-coupled to the output shaft by using the clutch mechanism when the motor drives the output shaft to rotate; and the transmission mechanism being power-decoupled from the output shaft by using the clutch mechanism when an external force drives the output shaft to rotate.

2. The actuator according to claim 1, wherein
the clutch mechanism comprises a main shaft and a baffle, a transmission gear, a coupling, and an elastic member are sequentially sleeved along an axial direction of the main shaft, a first end of the main shaft is in transmission cooperation to the transmission gear, a second end of the main shaft is fixedly connected to the baffle, and the coupling and the elastic member are pressed between the transmission gear and the baffle.

3. The actuator according to claim 2, wherein
the coupling comprises a first meshing portion and a second meshing portion that fit to each other, a first side of the first meshing portion abuts against an end face of the elastic member, and a second side of the second meshing portion is fixed to an end face of a first side of the transmission gear.

4. The actuator according to claim 3, wherein
the first meshing portion comprises at least two first convex portions arranged spaced away, a first concave portion is formed between adjacent first convex portions, the second meshing portion comprises at least two second convex portions arranged spaced away, a second concave portion is formed between adjacent second convex portions, the first convex portion fits to the second concave portion, and the second convex portion fits to the first concave portion.

5. The actuator according to claim 4, wherein
the first convex portion and the second convex portion are in an isosceles trapezoid or a circular arc.

6. The actuator according to any one of claims 3 to 5, wherein
a transmission groove is provided on the first meshing portion, a transmission shaft is arranged on the main shaft, and the transmission shaft is in transmission cooperation to the transmission groove.

7. The actuator according to any one of claims 3 to 6, wherein
a mounting groove is provided on the main shaft, a retainer ring is arranged inside the mounting groove, a stop portion is arranged on the retainer ring, and the stop portion abuts against an end face of a second side that is of the transmission gear and that is away from the second meshing portion.

8. The actuator according to any one of claims 4 to 7, wherein
the first meshing portion comprises four first convex portions arranged spaced away, the first concave portion is formed between the adjacent first convex portions, the second meshing portion comprises four second convex portions arranged spaced away, the second concave portion is formed between the adjacent second convex portions, the first convex portion fits to the second concave portion, and the second convex portion fits to the first concave portion.

9. The actuator according to any one of claims 2 to 8, wherein
the transmission mechanism is a worm wheel and worm, a worm is arranged at an output end of the motor, a worm wheel end of the worm wheel and worm is connected to the worm in a transmission manner, and a worm end of the worm wheel and worm is connected to the transmission gear in a transmission manner.

10. The actuator according to any one of claims 1 to 9, wherein
an axis of the motor and an axis of the transmission mechanism are perpendicular to each other, and the axis of the motor and an axis of the clutch mechanism are parallel to each other.

11. The actuator according to any one of claims 1 to 10,
further comprising a housing, the housing comprising an upper housing and a lower housing, an accommodation cavity being formed between the upper housing and the lower housing, and the motor, the transmission mechanism, and the clutch mechanism being arranged inside the accommodation cavity.

12. The actuator according to claim 11, wherein
the lower housing is in an L-shape.

13. A charging port cover, comprising the actuator according to any one of claims 1 to 12, and further comprising a cap, and a rotating shaft of the cap fits to the output shaft.

14. The charging port cover according to claim 13, wherein
the transmission mechanism is power-coupled to the cap by using the clutch mechanism when the motor drives the cap to rotate; and the transmission mechanism is power-decoupled from the cap by using the clutch mechanism when an external force drives the cap to rotate.

15. A vehicle, comprising the charging port cover according to claim 13 or 14, and
comprising a sending device, the sending device being configured to send a start signal to the motor.
